(19) Europäisches Patentamt
European Patent Office
Office européen des brevets

(11) **EP 4 456 188 A1**

(12) **EUROPEAN PATENT APPLICATION**
published in accordance with Art. 153(4) EPC

(43) Date of publication:
**30.10.2024   Bulletin 2024/44**

(21) Application number: **22911780.9**

(22) Date of filing: **16.12.2022**

(51) International Patent Classification (IPC):
$H01M\ 4/36$ (2006.01)          $H01M\ 4/525$ (2010.01)
$H01M\ 4/505$ (2010.01)       $H01M\ 4/62$ (2006.01)
$H01M\ 10/052$ (2010.01)    $C01G\ 53/00$ (2006.01)
$H01M\ 4/02$ (2006.01)

(52) Cooperative Patent Classification (CPC):
**C01G 53/00; H01M 4/02; H01M 4/36; H01M 4/505;
H01M 4/525; H01M 4/62; H01M 10/052;
Y02E 60/10**

(86) International application number:
**PCT/KR2022/020532**

(87) International publication number:
**WO 2023/121147 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2021   KR 20210184573**

(71) Applicants:
• **POSCO Holdings Inc.**
**Seoul 06194 (KR)**
• **RESEARCH INSTITUTE OF INDUSTRIAL
SCIENCE &
TECHNOLOGY**
**Pohang-si, Gyeongsangbuk-do 37673 (KR)**
• **Posco Future M Co., Ltd**
**Pohang-si, Gyeongsangbuk-do 37918 (KR)**

(72) Inventors:
• **YU, Byong Yong**
**Incheon 22018 (KR)**
• **HONG, Kijoo**
**Suwon-si, Gyeonggi-do 22018 (KR)**
• **SONG, Jung Hoon**
**Gwacheon-si, Gyeonggi-do 13835 (KR)**
• **LEE, Sanghyuk**
**Incheon 22405 (KR)**
• **CHOI, Kwon Young**
**Seoul 07987 (KR)**
• **HAN, Chang Joo**
**Seongnam-si, Gyeonggi-do 13474 (KR)**
• **NAM, Sang Cheol**
**Seoul 02587 (KR)**

(74) Representative: **Pfenning, Meinig & Partner mbB
Patent- und Rechtsanwälte
Theresienhöhe 11a
80339 München (DE)**

(54) **CATHODE ACTIVE MATERIAL FOR LITHIUM SECONDARY BATTERY, PREPARATION METHOD THEREFOR, AND LITHIUM SECONDARY BATTERY COMPRISING SAME**

(57)    The present exemplary embodiments relate to a positive active material for a lithium secondary battery, a manufacturing method thereof, and a lithium secondary battery including the same. The positive active material for a lithium secondary battery according to an exemplary embodiment includes first lithium metal oxide that contains nickel, cobalt, manganese, and doping elements, is in the form of single particles, and has a unit cell volume of 101.50 Å or more.

【FIG. 1】

EP 4 456 188 A1

**Description**

**FIELD OF THE INVENTION**

The present exemplary embodiments relate to a positive active material for a lithium secondary battery, a manufacturing method thereof, and a lithium secondary battery including the same.

**DESCRIPTION OF THE RELATED ART**

Recently, there is an explosive increase in demand for electric vehicles and the demand for increased driving range, the development of secondary batteries having high-capacity and a high energy density to drive them is being actively conducted worldwide.

In order to meet these requirements, NCM positive electrode material with high Ni content may be used, and the density of the electrode plate may be improved. Specifically, research is active on secondary batteries using a bimodal positive active material in which large and small particles are mixed in a certain proportion.

However, the specific surface area of the powder may be large in the form of a positive electrode material composed of secondary particles in which primary particles are agglomerated. As a result, the area in contact with the electrolyte solution is wide, so there is a high possibility of gas generation, and there is a problem of lifespan degradation due to this.

In addition, because the strength of secondary particles is weak, there is a problem that small particles break into primary particles during the rolling process, which also causes the lifespan characteristic to be degraded.

To solve this problem, a method to increase the size of the primary particle has been proposed.

However, when the size of the primary particle is increased through sintering agent, flux, or over-sintering at high temperature, a rock-salt structure is formed overall on the particle surface. In this case, there is a problem that electrochemical performance such as discharge capacity, lifespan, room temperature resistance, and resistance increase rate are deteriorated.

Therefore, there is a need to develop a technology that can manufacture positive active materials with excellent electrochemical performance while increasing the size of the primary particle.

**SUMMARY OF THE INVENTION**

In the present exemplary embodiment, it is intended to provide a positive active material for a lithium secondary battery with excellent electrochemical characteristics, a manufacturing method thereof, and a lithium secondary battery including the same.

The positive active material for a lithium secondary battery according to an exemplary embodiment includes a first lithium metal oxide; wherein, the first lithium metal oxide includes nickel, cobalt, manganese and a doping element, the first lithium metal oxide is in the form of a single particle, and a unit cell volume of the first lithium metal oxide is 101.50 Å or more.

A manufacturing method of a positive active material for a lithium secondary battery according to another exemplary embodiment includes
preparing an aqueous solution of a metal salt containing nickel raw material, cobalt raw material, and manganese raw material; obtaining a metal hydroxide by supplying the aqueous solution of the metal salt to a co-precipitation reactor; first sintering a mixture of the metal hydroxide particle, a lithium raw material and a doping raw material, for 8 to 15 hours in the 800°C to 950°C range; and obtaining a first lithium metal oxide in the form of single particle by additionally adding lithium raw material to the sintered first lithium metal oxide and performing second sintering.

Additionally, a lithium secondary battery according to another exemplary embodiment includes a positive electrode including a positive active material according to an exemplary embodiment, a negative electrode, and an electrolyte.

The positive active material according to an exemplary embodiment can implement a lithium secondary battery with excellent electrochemical performance by reducing the resistance increase rate.

Additionally, when applying the positive active material of the present exemplary embodiment, the lifespan of the lithium secondary battery can be increased and thermal stability can be improved.

**BRIEF DESCRIPTION OF THE DRAWINGS**

FIG. 1 shows an SEM image of a positive active material manufactured according to exemplary embodiment 1.
FIG. 2 shows an SEM image of the positive active material manufactured according to Comparative Example 1.

FIG. 3 shows the SEM image of the positive active material manufactured according to Comparative Example 2.

FIG. 4 is the Rietveld analysis result for the positive active material manufactured according to exemplary embodiment 1.

FIG. 5 is the Rietveld analysis result for the positive active material manufactured according to Comparative Example 1.

FIG. 6 is the Rietveld analysis result for the positive active material manufactured according to Comparative Example 2.

FIG. 7 is the analysis result of the (104) plane peak for the positive active material manufactured according to exemplary embodiment 1 and Comparative Example 1 to 2.

FIG. 8 is the analysis result of the (108) plane peak for the positive active material manufactured according to exemplary embodiment 1 and Comparative Example 1 to 2.

FIG. 9 shows the charge and discharge test results for exemplary embodiment 1 to 2 and Comparative Example 1 to 2.

FIG. 10 shows the high temperature lifespan measurement results for exemplary embodiment 1 to 2 and Comparative Example 1 to 2.

FIG. 11 shows the high temperature lifespan measurement results for exemplary embodiment 3 and Comparative Example 3.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

## Positive active material for lithium secondary battery

As described above, bimodal positive active material has a problem of high gas generation and small particles breaking during the rolling process.

To solve this problem, in an exemplary embodiment, the size of the primary particle can be increased to manufacture it in the form of a single particle. The lifespan characteristic can be improved by reducing the specific surface area of the positive active material and simultaneously increasing the particle strength. We can provide positive active materials with excellent resistance characteristics.

Specifically, the positive active material for a lithium secondary battery according to an exemplary embodiment, may include a first lithium metal oxide that contains nickel, cobalt, manganese, and doping element, is in the form of a single particle, and has a unit cell volume of 101.50 angstrom (Å) or more.

The unit cell volume of the first lithium metal oxide may be 101.50 angstrom or more, more specifically, 101.50 angstrom to 101.90 angstrom, preferably 101.60 angstrom to 101.80 angstrom. If the unit cell volume satisfies the range, single particle type active material with excellent lifespan and output characteristics can be manufactured. If it is less than that, it is difficult to synthesize it in the form of a single particle, and if it exceeds it, there are problems with capacity and initial efficiency deteriorated.

The unit cell volume refers to the volume of the basic unit that makes up the crystal lattice. In this specification, the unit cell volume is measured using XRD with Cu K$\alpha$ radiation ($\lambda$=1.54056 Å) as the X source. The 2$\theta$ value was measured varying at 2°/min in the 15-100° region, and is calculated by measuring the a and c axis values of the unit cell. More specifically, the first lithium metal oxide may include a layered structure crystal phase belonging to the R-3m space group.

The first lithium metal oxide may have a full width at half-maximum (FWHM) of (104) plane of 0.15 or less, more specifically, 0.10 to 0.15 or 0.11 to 0.14 range, measured using CuKα. If the FWHM of the (104) plane satisfies the range, the crystalline can synthesize a single particle with an excellent layered structure. If this is exceeded, the crystal grain size is small, making it difficult to form a layered structure and synthesize a single particle form, making it impossible to develop excellent electrochemical characteristics.

In addition, the first lithium metal oxide may have a full width at half-maximum (FWHM) of (108) plane of 0.15 or less, more specifically, 0.10 to 0.15 or 0.11 to 0.12 range, measured using CuKα. If the FWHM of (108) plane satisfies the range, the crystalline can synthesize a single particle with an excellent layered structure. If this is exceeded, the crystal grain size is small, making it difficult to form a layered structure and synthesize a single particle form, making it impossible to develop excellent electrochemical characteristics.

The grain size of the first lithium metal oxide may be in the 180nm to 250nm range, or 190nm to 220 range. If the grain size of the first metal oxide satisfies the range, both the lifespan and electrochemical characteristics of the lithium secondary battery applying the positive active material of the present exemplary embodiment can be improved. To manufacture it in the form of a single particle during high-temperature sintering, the crystal grains must grow above a certain level, and the content of Ni substituted in Li-position, which means cation mixing, is reduced and resistance and lifespan characteristics are improved.

The doping element may include one or more selected from the group consisting of Al, Zr, Nb, Mo, W, Ti, Ce, Mg, P, V, Sr, and B. More specifically, it may include at least one of Zr and Al.

Because Zr ions occupy Li sites, Zr acts as a kind of pillar and stabilizes the layered structure by relieving the contraction of the lithium ion path during the charge and discharge process. This phenomenon reduces cation mixing and increases the lithium diffusion coefficient, which can increase the lifespan.

In addition, Al suppresses the degradation of the layered structure into a spinel structure by moving Al ions to the tetragonal lattice site. The layered structure facilitates removal and insertion of Li ions, but the spinel structure does not allow smooth movement of Li ions, so it is not advisable for the layered structure to degrade into a spinel structure.

The doping amount of the doping element may range from 0.005 mole to 0.03 mole, or 0.015 mole to 0.025 mole, based on 1 mole of the total of nickel, cobalt, manganese and the doping element of the first metal oxide.

The doping amount of Zr in the first metal oxide may range from 0.0005 mole to 0.01 mole or 0.001 to 0.003 mole, based on 1 mole of the total of nickel, cobalt, manganese and doping elements of the first metal oxide. If the doping amount of Zr in the first metal oxide satisfies the range, the initial resistance can be reduced and excellent lifespan characteristics and thermal stability can be secured.

Specifically, the doping amount of Al in the first metal oxide may range from 0.0005 mol to 0.015 mol or 0.001 to 0.005 mol, based on 1 mole of the total of nickel, cobalt, manganese, and doping elements of the first metal oxide. If the doping amount of Al in the first metal oxide satisfies the range, high capacity can be secured and simultaneously improved thermal stability and lifespan characteristics, and the resistance increase rate at room temperature and high temperature can be reduced.

In the present exemplary embodiment, the Span ((D90-D10)/D50) value of the first lithium metal oxide may be in the 0.3 to 0.8 range, or 0.5 to 0.7 range. If the Span value satisfies the range, it shows a very narrow range particle size distribution. If it is outside the range, the particle size distribution is very wide, showing differences in electrochemical characteristics and physical properties between small-sized and large-sized particles. Therefore, it is important to control the size of particles.

Next, the first lithium metal oxide includes a coating layer positioned on the surface, and the coating layer may include at least one of Co compound, Al compound, Zr compound, Mg compound, Nb compound, Ce compound, and B compound. In this way, if an additional coating layer is included, the lifespan and resistance characteristic can be greatly improved by effectively maintaining structural stability by suppressing reaction with the electrolyte solution, removing residual lithium on the active material surface, and improving ion conductivity.

In the present exemplary embodiment, the content of nickel in the first lithium metal oxide may be 0.8 mol or more, based on a total of 1 mol of the nickel, cobalt, and manganese. More specifically, the nickel content may range from 0.8 mol to 0.98 mol, 0.86 mol to 0.89 mol, or 0.9 mol to 0.98 mol, based on 1 mole of the total of nickel, cobalt, and manganese in the first lithium metal oxide.

The content of cobalt in the first metal oxide may be 0 mol to 0.2 mol or 0.04 to 0.1 mol, based on 1 mole of the total of nickel, cobalt and manganese in the first lithium metal oxide.

The content of manganese in the first metal oxide may be 0.05 mole to 0.2 mole or 0.06 to 0.1 mole, based on 1 mole of the total of nickel, cobalt, and manganese in the first lithium metal oxide.

In first lithium metal oxide, if the nickel content satisfies the range, a positive active material with high power characteristics can be realized. The positive active material of the present exemplary embodiment with this composition has a higher energy density per volume, so it can improve the capacity of the battery to which it is applied, and is also suitable for use in electric vehicles.

Meanwhile, the positive active material for a lithium secondary battery according to the present exemplary embodiment, can include:

the first lithium metal oxide; and a second lithium metal oxide that consists of secondary particle including primary particles and has an average particle diameter D50 larger than that of the first lithium metal oxide.

The second lithium metal oxide includes nickel, cobalt, and manganese, and the content of nickel in the second lithium metal oxide may be 0.8 mol or more, based on 1 mole of the total of nickel, cobalt, and manganese in the second lithium metal oxide. More specifically, it may range from 0.8 mol to 0.98 mol, 0.86 mol to 0.89 mol, or 0.9 mol to 0.98 mol. The content of cobalt in the second metal oxide may be 0 mole to 0.2 mole or 0.04 to 0.1 mole, based on 1 mole of the total of nickel, cobalt, and manganese in the second lithium metal oxide.

The content of manganese in the second metal oxide may be 0.05 mole to 0.2 mole or 0.06 to 0.1 mole, based on 1 mole of the total of nickel, cobalt, and manganese in the second lithium metal oxide.

The second lithium metal oxide may further contain doping elements. At this time, the type of doping element is the same as that used in the first lithium metal oxide, and the appropriate content range is also the same. However, the doping elements for the first lithium metal oxide and the second lithium metal oxide may be the same or different elements.

For example, the doping element of the first lithium metal oxide may be Zr and the doping element of the second lithium metal oxide may be Al, or the doping element of the first lithium metal oxide may be Zr and Al and the doping element of the second lithium metal oxide may be Zr. The type of doping element can be appropriately selected and used depending on the battery effect to be implemented.

Additionally, the first lithium metal oxide and the second lithium metal oxide may have the same composition or may have different compositions.

For example, the first lithium metal oxide and the second lithium metal oxide may have the same nickel, cobalt, and manganese contents. Alternatively, the nickel content of the first lithium metal oxide may be higher than the nickel content of the second lithium metal oxide.

The content ratio of nickel, cobalt, and manganese contained in the first and second lithium metal oxide and the type and content of doping elements can be appropriately adjusted in the range of 0.8 mole or more of nickel.

If the nickel content in the first and second metal oxides satisfies the range, a positive active material with high power characteristics can be implemented. The positive active material of the present exemplary embodiment with this composition has a higher energy density per volume, so it can improve the capacity of the battery to which it is applied, and is also suitable for use in electric vehicles.

In the positive active material of the present exemplary embodiment, the content ratio of the first metal oxide and the second metal oxide may range from 3:7 to 1:9 or 2.5:7.5 to 1.5:8.5 as a weight ratio. When the first and second lithium metal oxides are mixed and used at the above weight ratio, a lithium secondary battery with excellent lifespan characteristics and excellent energy density can be realized because a large amount of active material can be filled per unit area. However, the mixing ratio of the first and second metal oxides can be appropriately adjusted according to the characteristics required for the lithium secondary battery.

In the present exemplary embodiment, the average particle diameter D50 of the first metal oxide particle may range from $3\mu m$ to $8\mu m$ or $3\mu m$ to $5\mu m$, and the average particle diameter D50 of the second metal oxide particle may range from $10\mu m$ to $20\mu m$ or $10\mu m$ to $15\mu m$. there is. If the average particle diameter of the first metal oxide and second metal oxide satisfies the range, the large particle diameter and small particle diameter particles can be positioned with appropriate distribution in the bimodal positive active material, and accordingly, the lithium secondary battery energy density can be improved.

## Manufacturing method of positive active material for lithium secondary battery

A manufacturing method of a positive active material according to another exemplary embodiment includes: preparing an aqueous solution of a metal salt containing nickel raw material, cobalt raw material, and manganese raw material; obtaining a metal hydroxide by supplying the aqueous solution of the metal salt to a co-precipitation reactor; first sintering a mixture of the metal hydroxide particle, a lithium raw material and a doping raw material, for 8 to 15 hours in the 800°C to 950°C range; and, obtaining a first lithium metal oxide in the form of single particle by additionally adding lithium raw material to the sintered first lithium metal oxide and performing second sintering.

The step of producing a metal salt an aqueous solution containing nickel raw material, cobalt raw material, manganese raw material, and water and then supplying the metal salt an aqueous solution to a co-precipitation reactor to obtain metal hydroxide, can be performed according to a generally known positive active material precursor manufacturing method in the art.

In the present exemplary embodiment, primary sintering is performed at a specific temperature range, and then secondary sintering is performed.

In addition, in the step of obtaining the lithium metal oxide, the mole ratio (Li/Me) of lithium (Li) to the entire metal (Me) excluding lithium may be in the 1.01 to 1.1 range, or 1.03 to 1.08 range. If Li/Me satisfies the range, a single particle of a layered structure with controlled residual lithium on the surface can be synthesized.

Next, the first sintering can be performed at a temperature ranging from 800°C to 950°C for 8 to 15 hours. If the first sintering process satisfies the conditions, particle growth in the form of a single particle occurs stably.

Next, a step of crushing the primary sintered lithium metal oxide may be included.

As mentioned above, crush can be performed using conventional crush equipment.

Next, the primary sintered lithium metal oxide is crushed, and then the lithium metal oxide is secondary sintered.

Additionally, the secondary sintering can be performed in the 400°C to 800°C, or 650 to 750 range for 5 to 10 hours. If the secondary sintering process satisfies the conditions, it can remove residual lithium on the surface and lower the initial resistance.

The content of the lithium raw material additionally added in the secondary sintering step may range from 0.005 mole to 0.03 mole, specifically 0.01 to 0.02 mole, based on 1 mole of the primary sintered lithium metal oxide.

Meanwhile, in the present exemplary embodiment, the secondary sintering step may be performed by adding and mixing raw materials for forming a coating layer.

At this time, the coating layer forming raw material includes at least one of cobalt raw material, aluminum raw material, zirconium raw material, magnesium raw material, niobium raw material, cerium raw material, and boron raw material.

A secondary sintering process can be performed after adding and mixing one or two types of transition metal raw materials as raw materials for forming a coating layer on lithium metal oxide. In this case, it is possible to suppress the reaction with the electrolyte solution, effectively control residual lithium, improve thermal stability, and is effective in improving resistance and lifespan.

In the secondary sintering step, the input amount of the raw material for forming the coating layer may range from 0.005 to 0.03 mole or 0.01 to 0.02 mole, using 1 mole of primary sintered lithium metal oxide as a reference. If the input amount of transition metal raw material satisfies the range, lifespan is improved and discharge capacity increases.

**Lithium secondary battery**

In another exemplary embodiment of the present invention, a lithium secondary battery including: a positive electrode including a negative active material according to an embodiment of the present invention described above, a negative electrode, and an electrolyte positioned between the negative electrode and the positive electrode is provided.

The positive electrode includes a current collector and a positive electrode active material layer including a positive electrode active material formed on the current collector.

The positive electrode active material includes a positive electrode active material according to an embodiment. Therefore, detailed description of the positive active material will be omitted.

The current collector, for example, can be used stainless steel, aluminum, nickel, titanium, sintering carbon, or aluminum or stainless steel with surface treatment of carbon, nickel, titanium, silver, etc.

In one embodiment, the positive electrode active material layer may further include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery to be configured.

The positive electrode active material layer is formed by mixing the positive electrode active material, a binder and optionally a conductive material in a solvent to prepare an active material composition, and applying the active material composition to a current collector. Since such an active material layer formation method is widely known in the art, a detailed description thereof will be omitted in this specification. As the solvent, N-methylpyrrolidone and the like can be used, but is not limited thereto.

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx ($0 < x < 2$), Si-Y alloy (the Y is an element selected from the group consisting of an alkali metal, an alkaline earth metal, a group 13 element, a group 14 element, a transition metal, and a rare earth element and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide.

The negative active material layer also includes a binder and may optionally further include a conductive material.

The binder may be polyvinylalcohol, carboxylmethylcellulose/styrenebutadiene rubber, hydroxypropylenecellulose, diacetylenecellulose, polyvinylchloride, polyvinylpyrrolidone, polytetrafluoroethylene, polyvinylidene fluoride, polyethylene or polypropylene, but is not limited thereto. The binder can be mixed from 1 wt% to 30 wt% with respect to the total amount of composition for forming the negative active material layer.

The conductive material is not particularly limited as long as it has conductivity without causing a chemical change in a battery, and specifically, graphite such as natural graphite and artificial graphite; carbon black such as acetylene black, Ketjen black, channel black, furnace black, lamp black, and summer black; a conductive fiber such as a carbon fiber and a metal fiber; metal powders such as carbon fluoride, aluminum, and nickel powders; conductive whiskeys such as zinc oxide and potassium titanate; a conductive metal oxide such as titanium oxide; a conductive material such as a polyphenylene derivative, or the like, may be used as the conductive material. The conductive material may be mixed in an amount of 0.1 to 30 wt% based on the total amount of the composition for forming a negative electrode active material layer.

As the current collector, one selected from the group consisting of copper foil, nickel foil, stainless steel foil, titanium foil, nickel foam, copper foam, a conductive metal-coated polymer substrate, and a combination thereof may be used.

The negative electrode is formed by mixing a negative active material, a binder and optionally a conductive material in a solvent to prepare an active material composition, and applying the active material composition to a current collector. Since this electrode manufacturing method is widely known in the field, detailed description will be omitted in this specification. N-methylpyrrolidone, etc. can be used as the solvent, but it is not limited thereto.

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used.

Lithium secondary batteries can be classified into lithium ion batteries, lithium ion polymer batteries, and lithium polymer batteries depending on the type of separator and electrolyte used. Depending on the shape, it can be classified into cylindrical, prismatic, coin-type, pouch-type, etc., and depending on the size, it can be divided into bulk type and thin film type. The structure and manufacturing method of these batteries are widely known in this field, and is not described in further detail.

## DETAILED DESCRIPTION OF THE EMBODIMENTS

Hereinafter, an exemplary embodiment will be described in detail. However, this is presented as an example, and the present invention is not limited thereby, and the present invention is only defined by the category of the claim range, which will be described later.

**Exemplary embodiment 1**

**(1) Preparation of precursor**

The precursor was prepared using a general co-precipitation method.

Specifically, $NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare a metal salt an aqueous solution.

After preparing the co-precipitation reactor, $N_2$ was purged to prevent oxidation of metal ions during the co-precipitation reaction, and the reactor temperature was maintained at 50°C.

$NH_4(OH)$ was added as a chelating agent to the co-precipitation reactor, and NaOH was used to adjust pH.

The precipitate obtained according to the co-precipitation process was filtered, washed with distilled water, and dried in an oven at 100°C for 24 hours to prepare a positive active material precursor.

The composition of the manufactured precursor was $Ni_{0.88}Co_{0.06}Mn_{0.06}(OH)_2$, and the average particle diameter D50 was about 3.5$\mu$m.

**(2) Manufacturing of positive active material**

The mixture of uniformly mixing 47.2 g of LiOH·H$_2$O, a lithium source, and 0.266 g of ZrO$_2$ with 100 g of the precursor prepared in the (1) was first sintered in an O$_2$ atmosphere. The first sintering was performed at 830-870°C for 10 hours.

At this time, the mole ratio (Li/Me) of lithium (Li) to the entire metal (Me) excluding lithium was designed as 1.03/1.00.

The first sintering material was crushed/pulverized using an ACM (air classifying mill) and jet mill.

Next, 80 g of dried positive active material and 0.659 g of Co$_3$O$_4$ (0.001 mole) were mixed and second sintering was performed under an oxygen atmosphere. A positive active material consisting of a single particle, having a composition of $Li_{1.03}(Ni_{0.88}Co_{0.06}Mn_{0.06})_{0.998}Zr_{0.002}O_2$, and having a coating layer containing Co was manufactured. Second sintering was performed at 650-750°C for 5 hours in an oxygen atmosphere.

**Exemplary embodiment 2**

The active material was manufactured using the same method as exemplary embodiment 1, except that 0.422 g of Al(OH)$_3$ and 0.267 g of ZrO$_2$ were used as doping raw materials during the first sintering. A positive active material with a composition of $Li_{1.03}(Ni_{0.88}Co_{0.06}Mn_{0.06})_{0.993}Al_{0.005}Zr_{0.002}O_2$ and a coating layer containing Co was manufactured.

**Exemplary embodiment 3**

The positive active material manufactured according to exemplary embodiment 1 was used as a small size positive active material. Here, the large size positive active material, which consists of secondary particle including the primary particle and has an average particle diameter D50 of 14$\mu$m, is mixed at a weight ratio of 2:8 (small size positive active material:large size positive active material) to form a bimodal form.

At this time, the composition of the large size positive active material was $Li_{1.03}Ni_{0.88}Co_{0.05}Mn_{0.05}O_2$.

**Comparative Example 1**

**(1) Preparation of precursor**

A precursor having a composition of $Ni_{0.85}Co_{0.11}Mn_{0.04}(OH)_2$ was manufactured using the same method as exemplary embodiment 1, but controlling the amount of raw material.

**(2) Manufacturing of positive active material**

The mixture of 100 g of the precursor prepared in the (1), 46.7 g of LiOH-H$_2$O, and 0.266 g of ZrO$_2$ was uniformly mixed and sintered in an O$_2$ atmosphere. Sintering was performed at 730-770°C for 10 hours.

At this time, $Li_{1.02}(Ni_{0.85}Co_{0.11}Mn_{0.04})Zr_{0.002}O_2$ compound was synthesized through lithium sintering. 80 g of the synthesized positive active material was mixed with 0.658 g of Co$_3$O$_4$ and sintered at 650-750°C for 5 hours to produce a positive active material with 1.0 mol% Co coated on the positive active material surface.

At this time, the mole ratio (Li/Me) of lithium (Li) to the entire metal (Me) excluding lithium was designed as 1.03/1.00.

The first sintering material was crushed using an ACM (Air classifying mill), washed with water to remove residual lithium on the surface, and dried for 12 hours.

Next, 80 g of dried positive active material and 0.659 g of Co$_3$O$_4$ (0.001 mole) were mixed and then secondary sintered under an oxygen atmosphere to form a single particle, with a composition of $Li_{1.03}(Ni_{0.85}Co_{0.11}Mn_{0.04})_{0.998}Zr_{0.002}O_2$. Secondary sintering was performed at 650-750°C for 5 hours.

**Comparative Example 2**

A positive active material with a composition of $Li_{1.03}(Ni_{0.83}Co_{0.09}Mn_{0.08})_{0.998}Zr_{0.002}O_2$ was prepared using the same method as exemplary embodiment 1, except that a precursor with a composition of $Ni_{0.83}Co_{0.09}Mn_{0.08}(OH)_2$ was

used. Manufactured.

**Comparative Example 3**

The positive active material manufactured according to Comparative Example 1 was used as a small size positive active material. Here, the large size positive active material, which consists of secondary particle including the primary particle and has an average particle diameter D50 of 14 $\mu$m, is mixed at a weight ratio of 2:8 (small size positive active material:large size positive active material) to form a bimodal form.

At this time, the composition of the large size positive active material was $Li_{1.03}Ni_{0.88}Co_{0.05}Mn_{0.05}O_2$.

**Comparative Example 4**

**(1) Preparation of precursor**

The precursor was prepared using the same method as exemplary embodiment 1.

**(2) Manufacturing of positive active material**

The mixture of 100 g of the precursor prepared in the (1), 46.7 g of LiOH-H$_2$O, and 0.266 g of ZrO$_2$ was uniformly mixed and sintered in an O$_2$ atmosphere. Sintering was performed at 850°C for 15 hours to produce a positive active material with a composition of $Li_{1.03}(Ni_{0.88}Co_{0.06}Mn_{0.06})_{0.998}Zr_{0.002}O_2$.

**Experiment preparation** - **manufacturing of coin-type half-cell**

To evaluate the physical properties and electrochemical properties of the positive active material manufactured according to the exemplary embodiment and comparative example, a coin-type half-cell was manufactured as follows.

Specifically, positive active material, conductive material (Denka Black), and polyvinylidene fluoride binder (Product name: KF1120) were mixed at a weight ratio of 96.5: 1.5: 2. This mixture was added to N-methyl-2-pyrrolidone solvent so that the solid content was about 30 wt% to prepare a positive active material slurry.

The slurry was coated on aluminum foil (thickness: 15 $\mu$m), a positive electrode current collector, using a doctor blade, dried, and rolled to manufacture a positive electrode. The loading amount of the positive electrode was about 15 mg/cm$^2$, and the rolling density was about 3.5g/cm$^3$.

A 2032 coin-type half-cell was manufactured using the usual method using the positive electrode, lithium metal negative electrode (thickness 300$\mu$m, MTI), electrolyte solution, and polypropylene separator. The electrolyte solution is prepared by dissolving 1M LiPF$_6$ in a mixed solvent of ethylene carbonate, dimethyl carbonate and ethylmethyl carbonate (EMC) (mixing ratio EC:DMC:EMC=3:4:3 volume%) to prepare a mixed solution.

**Experimental Example 1** - **Evaluation of active material morphology and particlesize distribution**

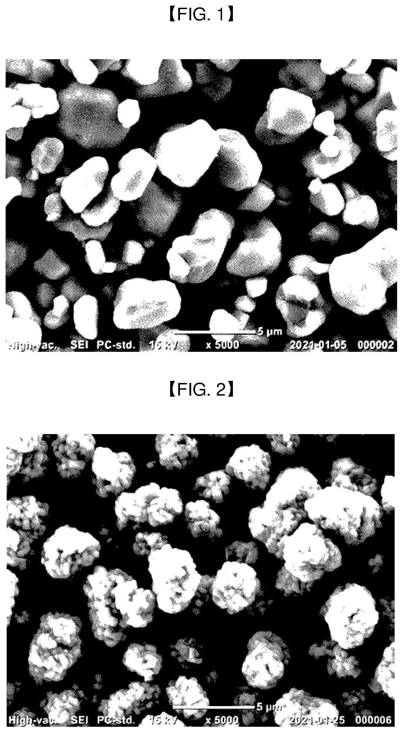

SEM analysis was performed on the positive active material manufactured according to exemplary embodiment 1 and Comparative Example 1 to 2, and was each shown in FIG. 1, FIG. 2, and FIG. 3. In addition, after dispersing the active material in distilled water, the particle size distribution was measured by analyzing the degree of scattering from the light source using average particle size measurement equipment (Particle Size Analyzer). The results are shown in the following Table 1.

(Table 1)

| Particle size distribution ($\mu$m) | exemplary embodiment1 | Comparative Example1 | Comparative Example2 |
|---|---|---|---|
| D$_{min}$ | 2.25 | 2.49 | 1.88 |
| D$_{10}$ | 2.8 | 3.28 | 2.12 |
| D$_{50}$ | 3.69 | 4.66 | 4.03 |
| D$_{90}$ | 4.92 | 7.26 | 7.67 |
| D$_{max}$ | 7.72 | 15.47 | 18.39 |
| Span (D$_{90}$-D$_{10}$)/D$_{50}$ | 0.57 | 0.85 | 1.38 |

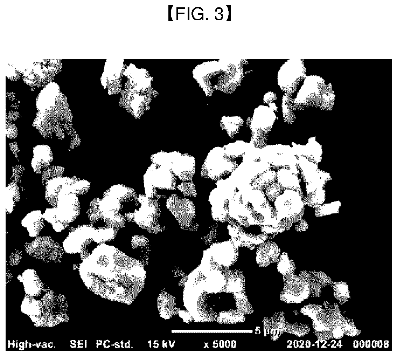

Referring to Table 1, the average particle diameter D50 of the positive active material manufactured according to exemplary embodiment 1 was in the range of $3\mu m$ to $4\mu m$. Additionally, it can be confirmed that it has a very narrow range of particle size distribution. On the other hand, in Comparative Examples 1 and 2, it can be seen that the particle size distribution is very wide. Also, referring to FIG. 1, the positive active material manufactured according to exemplary embodiment 1 consists of one particle, that is, a single particle, and it can be seen that the particle is uniform.
In contrast, referring to FIG. 2, In the case of Comparative Example 1, it can be confirmed that the secondary particle is in the form of irregular agglomeration of primary particles. Also, referring to FIG. 3, In the case of Comparative Example 2, it can be seen that the single particle form and the monoclinic form consisting of multiple particles are mixed.

## Experimental Example 2 - X-ray diffraction evaluation

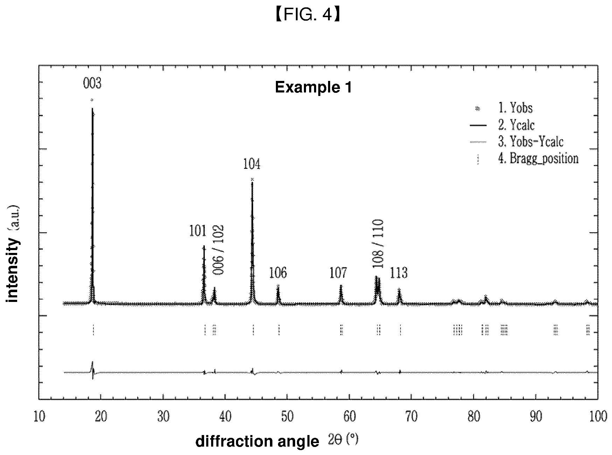

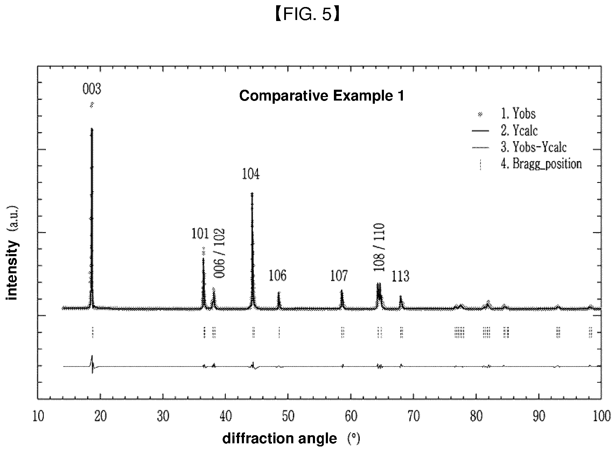

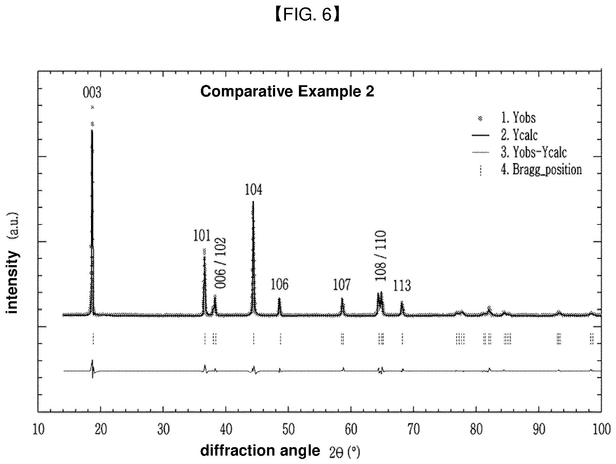

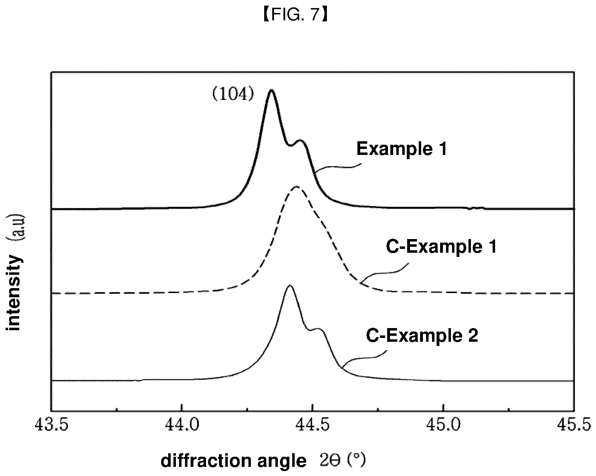

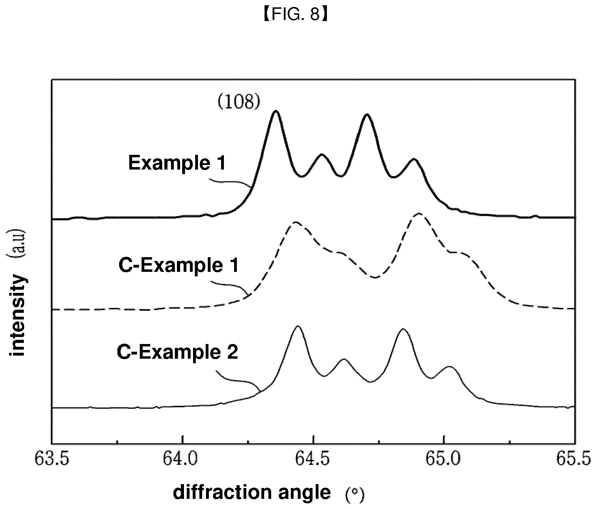

For the positive active material manufactured according to exemplary embodiment 1 and Comparative Example 1 to 2, the $2\theta$ value was changed at 2o/min in the 15-100° region using Cu K$\alpha$ radiation ($\lambda$=1.54056 Å) as the X source, and X-ray diffraction analysis was performed using X'pert pro (PANalytical).
The X-ray diffraction analysis result is shown in FIG. 4 to 6, and the peak analysis results for planes (104) and (108) are shown in FIG. 7 and FIG. 8.
In addition, the following characteristics were investigated using this and are shown in Table 2.
Full width at half maximum (FWHM);

(1) FWHM (104); It represents the width (FWHM) of 1/2 the intensity height of the peak corresponding to the (104) plane (the peak where $2\theta$ is about 44.5°).
(2) FWHM (108); It represents the width (FWHM) of 1/2 the intensity height of the peak corresponding to the 108 plane (the peak where $2\theta$ is about 65°).
(3) Crystallite size; Crystal size was calculated using Debye-Scherrer equation 1 below.
(4) Unit volume; Unit volume was calculated using Equation 2 below.

$$\Phi = K\lambda\beta\cos\theta \quad (\Phi: \text{crystal size}, K \text{ (shape coefficient): } 0.89, \lambda: \text{wawlength}, \beta: \text{FWHM}, \theta: \text{diffration angle})$$ [Equation 1]

[Equation 2]

Unit cell volume: a-axis*a-axis*c-axis*sin60 (hexagonal structure)

FIG. 4 to FIG. 6 is the Rietveld analysis result. Referring to FIG. 4, it can be confirmed that the positive active material according to exemplary embodiment 1 well represents the specific peak of the ideal layered structure and that the structure is well formed. Additionally, using the result in FIG. 4 to FIG.6, the a-axis, c-axis, and half width were calculated.
Referring to FIG. 7 and FIG. 8, the FWHM of (104), and (108) planes can be obtained.
Additionally, the degree of cation mixing can be predicted by splitting the peak. In FIG. 7 and FIG. 8, it can be seen that in exemplary embodiment 1, the splitting is prominent. Through this, it can be seen that the cation mixing of Li/Ni is small, and as a result, the resistance characteristic is excellent and the crystals have grown well.

(Table 2)

| Division | F WHM 104 | F WHM 108 | Crystallite size (nm) | a (Å) | c (Å) | c/a | Unit cell volume (Å) |
|---|---|---|---|---|---|---|---|
| exemplary embodiment1 | 0.1115 | 0.1183 | 208.7 | 2.8762 | 14.1954 | 4.9355 | 101.699 |
| Comparative Example1 | 0.2037 | 0.1602 | 145.3 | 2.8691 | 14.1969 | 4.9482 | 101.208 |
| Comparative Example2 | 0.1091 | 0.1274 | 169.1 | 2.8731 | 14.1842 | 4.9369 | 101.400 |

Referring to Table 2, it can be seen that the positive active material of exemplary embodiment 1 has a very narrow FWHM of 0.150 or less on the (104) and (108) planes, and the crystal size is also 180 nm or more. This may mean that a single particle of a layered structure was synthesized. It can be seen that the volume of the unit cell also increases as the lattice constant (lattice parameter; a, c) changes.

**Experimental Example 3 - Measurement of charge and discharge characteristics and lifespan characteristics**

The coin-type half-cell manufactured according to the experimental preparation was aged for 10 hours at a room temperature of 25°C, and then a charge and discharge test was performed using equipment (manufacturer/model: TOYO-3100).

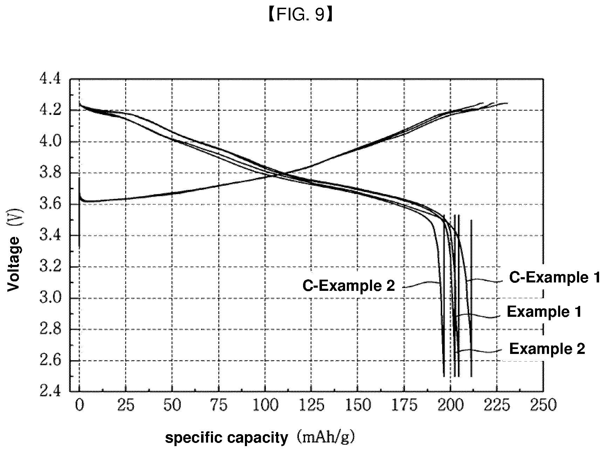

The first charge and discharge were performed with a current of 0.1C until it reached 4.25 V, followed by a constant voltage charge until it reached a current of 0.05C. After the cell for which charging was completed went through an rest period of about 10 minutes, constant current discharge was performed until the voltage reached 2.5 V with a current of 0.1C. The result is FIG. 9, Table 3 and Table 4.

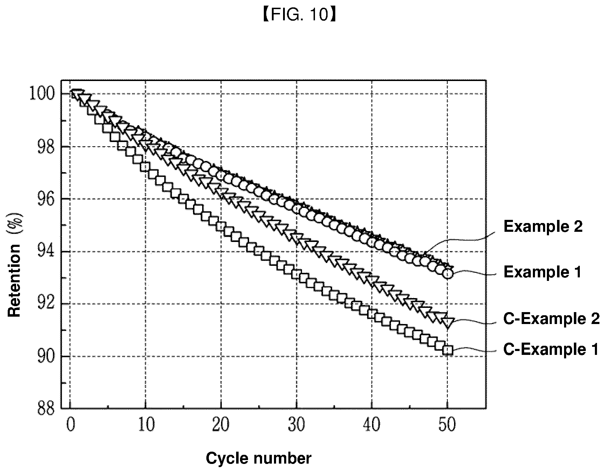

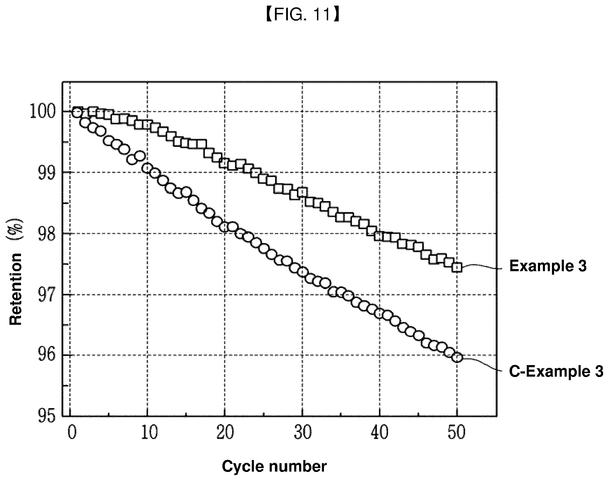

Lifespan evaluation was performed at 45°C, and constant current charge was performed with a current of 0.5C until it reached 4.25 V, followed by constant voltage charge until it reached a current of 0.05C. The cell whose charge was completed went through an rest period of about 10 minutes, and then was evaluated by repeating a cycle of constant current discharge 50 times until the voltage reached 2.5 V with a current of 1C. The result is shown in FIG. 10, FIG. 11, Table 3 and Table 4, and the capacity retention rate (%) was calculated from Equation 2 below.

Capacity maintenance rate (%) = [discharge capacity of 50th cycle / discharge capacity of 1st cycle] $\times$ 100          [Equation 2]

(Table 3)

| Division | 1st 0.1C charge | 1st 0.1C discharge | Initial efficiency @25C | Retention @45C |
|---|---|---|---|---|
| exemplary embodiment 1 | 231 | 205 | 88.5 | 93.1 |
| exemplary embodiment 2 | 228 | 201 | 88.2 | 93.3 |
| Comparative Example 1 | 223 | 212 | 94.8 | 90.2 |
| Comparative Example 2 | 218 | 197 | 91.2 | 91.3 |

Referring to Table 3, FIG. 9, and FIG. 10, it can be seen that the lifespan characteristic is improved when positive active materials according to exemplary embodiments 1 and 2 are applied.

(Table 4)

| Division | 1st 0.1C charge | 1st 0.1C discharge | Initial efficiency @25C | Retention @45C |
|---|---|---|---|---|
| exemplary embodiment 3 | 228.4 | 205.0 | 89.8 | 97.5 |
| Comparative Example 3 | 227.2 | 208.9 | 91.9 | 95.9 |

Referring to Table 4, and FIG. 11, exemplary embodiment 3 and comparative example 3, positive active materials mixed in a bimodal form have an advantageous effect in terms of realizing a high energy density. However, when a positive active material in the form of a single particle is applied in small particles as in exemplary embodiment 3, it can be seen that the capacity retention rate is very excellent.

The present invention is not limited to the exemplary embodiments but can be manufactured in a variety of different forms. In the technical field to which the present invention belongs, a person of an ordinary skill can understand that it can be implemented in another specific form without changing the technical idea or essential characteristics of the present invention. Therefore, the exemplary embodiments described above should be understood in all respects as illustrative and not limiting.

**Claims**

1.   A positive active material for a lithium secondary battery, comprising:

a first lithium metal oxide;

wherein, the first lithium metal oxide includes nickel, cobalt, manganese and a doping element,
the first lithium metal oxide is in the form of a single particle, and
a unit cell volume of the first lithium metal oxide is 101.50 Å or more.

**2.** The positive active material of claim 1, wherein:
a Span ((D90-D10)/D50) value of the first lithium metal oxide is in the 0.3 to 0.8 range.

**3.** The positive active material of claim 1, wherein:
the first lithium metal oxide has a full width at half-maximum (FWHM) of 0.15 or less on the (104) plane measured using CuKα line.

**4.** The positive active material of claim 1, wherein:
the first lithium metal oxide has a full width at half-maximum (FWHM) of 0.15 or less on the (108) plane measured using CuKα line.

**5.** The positive active material of claim 1, wherein:
a grain size of the first lithium metal oxide ranges from 180nm to 250nm.

**6.** The positive active material of claim 1, wherein:
the doping element includes one or more selected from the group consisting of Al, Zr, Nb, Mo, W, Ti, Ce, Mg, P, V, Sr, and B.

**7.** The positive active material of claim 1, wherein:
a content of the doping element ranges from 0.005 mole to 0.03 mole, based on a total of 1 mole of the nickel, cobalt, manganese and doping element.

**8.** The positive active material of claim 1, wherein:
the first lithium metal oxide contains a layered structure crystalline belonging to the R-3m space group.

**9.** The positive active material of claim 1, wherein:

the first lithium metal oxide contains a coating layer that is positioned on the surface,
the coating layer contains at least one of Co compound, Al compound, Zr compound, Mg compound, Nb compound, Ce compound, and B compound.

**10.** The positive active material of claim 1, wherein:
a content of nickel in the first lithium metal oxide is more than 0.86 mole, based on 1 mole of the total of the nickel, cobalt and manganese.

**11.** The positive active material of claim 1, comprising:

the first lithium metal oxide; and
a second lithium metal oxide that consists of secondary particle including primary particles and has an average particle diameter D50 larger than that of the first lithium metal oxide.

**12.** The positive active material of claim 11, wherein:

the second lithium metal oxide includes nickel, cobalt, and manganese, and
a content of nickel in the second lithium metal oxide is 0.8 mol or more, based on 1 mole of the total of nickel, cobalt and manganese in the second lithium metal oxide.

**13.** The positive active material of claim 11, wherein:
a mixing ratio of the first lithium metal oxide and the second lithium metal oxide ranges from 3:7 to 1:9 in weight ratio.

**14.** The positive active material of claim 11, wherein:
the first lithium metal oxide and the second lithium metal oxide have different composition.

**15.** A method of preparing a positive active material for lithium secondary battery, comprising:

preparing an aqueous solution of a metal salt containing nickel raw material, cobalt raw material, and manganese raw material;

obtaining a metal hydroxide by supplying the aqueous solution of the metal salt to a co-precipitation reactor;

first sintering a mixture of the metal hydroxide particle, a lithium raw material and a doping raw material, for 8 to 15 hours in the 800°C to 950°C range; and

obtaining a first lithium metal oxide in the form of single particle by additionally adding lithium raw material to the sintered first lithium metal oxide and performing second sintering.

16. The method of claim 15, wherein:
in the first sintering, when mixing the metal hydroxide particle and lithium raw material, the mole ratio (Li/Me) of lithium (Li) to the entire metal (Me) excluding lithium is in the range of 1.01 to 1.1.

17. The method of claim 15, wherein:
the second sintering is performed in the 400°C to 800°C range for 5 to 10 hours.

18. The method of claim 15, wherein:

the second sintering is performed by adding and mixing a raw material to form a coating layer,

the raw material forming the coating layer includes at least one of cobalt raw material, aluminum raw material, zirconium raw material, magnesium raw material, niobium raw material, cerium raw material, and boron raw material.

19. The method of claim 18, wherein:
an input amount of the raw material for forming the coating layer ranges from 0.01 mole to 0.02 mole, based on 1 mole of the first sintered lithium metal oxide.

20. The method of claim 15, wherein:
a content of the lithium raw material added in the second sintering ranges from 0.005 mole to 0.03 mole, based on 1 mole of the first sintered lithium metal oxide.

21. A lithium secondary battery, comprising:

a positive electrode containing a positive active material of claim 1;

a negative electrode; and

an electrolyte.

【FIG. 1】

【FIG. 2】

【FIG. 3】

【FIG. 4】

【FIG. 5】

【FIG. 6】

【FIG. 7】

【FIG. 8】

【FIG. 9】

【FIG. 10】

【FIG. 11】

**EP 4 456 188 A1**

<table>
<tr><td colspan="2" align="center">INTERNATIONAL SEARCH REPORT</td><td colspan="2">International application No.<br><br>**PCT/KR2022/020532**</td></tr>
</table>

### A. CLASSIFICATION OF SUBJECT MATTER

**H01M 4/36**(2006.01)i; **H01M 4/525**(2010.01)i; **H01M 4/505**(2010.01)i; **H01M 4/62**(2006.01)i; **H01M 10/052**(2010.01)i; **C01G 53/00**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); C01B 25/45(2006.01); C01G 53/00(2006.01); H01M 10/052(2010.01); H01M 10/44(2006.01); H01M 4/485(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 단입자 (single particle), 도핑 원소 (dopant), 단위포 (unit cell), 층상 구조 (layered structure)

### C. DOCUMENTS CONSIDERED TO BE RELEVANT

| Category* | Citation of document, with indication, where appropriate, of the relevant passages | Relevant to claim No. |
|---|---|---|
| X | KR 10-2020-0125443 A (SAMSUNG SDI CO., LTD. et al.) 04 November 2020 (2020-11-04)<br>See abstract; claims 1, 2, 7 and 11; and paragraphs [0056], [0057], [0088]-[0094] and [0136]. | 1-10,21 |
| Y | | 11-14 |
| A | | 15-20 |
| Y | KR 10-2021-0150863 A (SK INNOVATION CO., LTD.) 13 December 2021 (2021-12-13)<br>See claims 1, 4 and 5; and paragraphs [0063], [0067] and [0091]-[0094]. | 11-14 |
| A | JP 2021-022547 A (JX NIPPON MINING & METALS CORP.) 18 February 2021 (2021-02-18)<br>See claims 1, 3 and 4; and paragraphs [0039] and [0043]. | 1-21 |
| A | JP 2010-517917 A (A123 SYSTEMS, INC.) 27 May 2010 (2010-05-27)<br>See entire document. | 1-21 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **05 April 2023** | **06 April 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/020532**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2306545 B1 (LG ENERGY SOLUTION, LTD.) 30 September 2021 (2021-09-30)<br>See entire document. | 1-21 |

Form PCT/ISA/210 (second sheet) (July 2022)

**INTERNATIONAL SEARCH REPORT**
Information on patent family members

International application No.

**PCT/KR2022/020532**

| Patent document cited in search report | | | Publication date (day/month/year) | Patent family member(s) | | | Publication date (day/month/year) |
|---|---|---|---|---|---|---|---|
| KR | 10-2020-0125443 | A | 04 November 2020 | CN | 111864194 | A | 30 October 2020 |
| | | | | CN | 111864195 | A | 30 October 2020 |
| | | | | EP | 3733609 | A1 | 04 November 2020 |
| | | | | EP | 3733610 | A1 | 04 November 2020 |
| | | | | JP | 2020-184534 | A | 12 November 2020 |
| | | | | JP | 2020-184535 | A | 12 November 2020 |
| | | | | JP | 7033161 | B2 | 09 March 2022 |
| | | | | JP | 7033162 | B2 | 09 March 2022 |
| | | | | KR | 10-2019-0046224 | A | 07 May 2019 |
| | | | | KR | 10-2020-0125442 | A | 04 November 2020 |
| | | | | US | 2020-0251719 | A1 | 06 August 2020 |
| | | | | US | 2020-0343550 | A1 | 29 October 2020 |
| | | | | US | 2020-0343551 | A1 | 29 October 2020 |
| | | | | WO | 2019-083179 | A1 | 02 May 2019 |
| KR | 10-2021-0150863 | A | 13 December 2021 | CN | 113764656 | A | 07 December 2021 |
| | | | | EP | 3919444 | A2 | 08 December 2021 |
| | | | | EP | 3919444 | A3 | 15 December 2021 |
| | | | | US | 2021-0384502 | A1 | 09 December 2021 |
| JP | 2021-022547 | A | 18 February 2021 | None | | | |
| JP | 2010-517917 | A | 27 May 2010 | CN | 101361210 | A | 04 February 2009 |
| | | | | CN | 101361210 | B | 26 November 2014 |
| | | | | CN | 101427402 | A | 06 May 2009 |
| | | | | CN | 101427402 | B | 20 March 2013 |
| | | | | CN | 101669234 | A | 10 March 2010 |
| | | | | CN | 103151556 | A | 12 June 2013 |
| | | | | CN | 103151556 | B | 14 October 2015 |
| | | | | EP | 1938402 | A2 | 02 July 2008 |
| | | | | EP | 1938402 | B1 | 05 December 2018 |
| | | | | EP | 1972018 | A2 | 24 September 2008 |
| | | | | EP | 2118949 | A2 | 18 November 2009 |
| | | | | JP | 2009-516631 | A | 23 April 2009 |
| | | | | JP | 2009-518262 | A | 07 May 2009 |
| | | | | JP | 2013-227215 | A | 07 November 2013 |
| | | | | JP | 2017-073390 | A | 13 April 2017 |
| | | | | JP | 5377967 | B2 | 25 December 2013 |
| | | | | JP | 5548366 | B2 | 16 July 2014 |
| | | | | JP | 6073040 | B2 | 01 February 2017 |
| | | | | JP | 6328888 | B2 | 23 May 2018 |
| | | | | KR | 10-1320788 | B1 | 23 October 2013 |
| | | | | KR | 10-1375197 | B1 | 18 March 2014 |
| | | | | KR | 10-1558608 | B1 | 07 October 2015 |
| | | | | KR | 10-2008-0045170 | A | 22 May 2008 |
| | | | | KR | 10-2008-0074208 | A | 12 August 2008 |
| | | | | KR | 10-2009-0109124 | A | 19 October 2009 |
| | | | | PL | 1938402 | T3 | 28 June 2019 |
| | | | | TW | 200724482 | A | 01 July 2007 |
| | | | | TW | 200733457 | A | 01 September 2007 |
| | | | | TW | 200843165 | A | 01 November 2008 |
| | | | | TW | I430500 | B | 11 March 2014 |
| | | | | TW | I445660 | B | 21 July 2014 |

Form PCT/ISA/210 (patent family annex) (July 2022)

**INTERNATIONAL SEARCH REPORT**
Information on patent family members

International application No.

**PCT/KR2022/020532**

| Patent document cited in search report | | | Publication date (day/month/year) | Patent family member(s) | | | Publication date (day/month/year) |
|---|---|---|---|---|---|---|---|
| | | | | TW | I456825 | B | 11 October 2014 |
| | | | | US | 2007-0031732 | A1 | 08 February 2007 |
| | | | | US | 2007-0190418 | A1 | 16 August 2007 |
| | | | | US | 2007-0292747 | A1 | 20 December 2007 |
| | | | | US | 2011-0195306 | A1 | 11 August 2011 |
| | | | | US | 2012-0270109 | A1 | 25 October 2012 |
| | | | | US | 2015-0236349 | A1 | 20 August 2015 |
| | | | | US | 7939201 | B2 | 10 May 2011 |
| | | | | US | 8057936 | B2 | 15 November 2011 |
| | | | | US | 8158090 | B2 | 17 April 2012 |
| | | | | US | 8323832 | B2 | 04 December 2012 |
| | | | | US | 8617430 | B2 | 31 December 2013 |
| | | | | WO | 2007-064934 | A2 | 07 June 2007 |
| | | | | WO | 2007-064934 | A3 | 15 May 2008 |
| | | | | WO | 2008-039170 | A2 | 03 April 2008 |
| | | | | WO | 2008-039170 | A3 | 13 November 2008 |
| | | | | WO | 2008-109209 | A2 | 12 September 2008 |
| | | | | WO | 2008-109209 | A3 | 04 December 2008 |
| KR | 10-2306545 | B1 | 30 September 2021 | CN | 110915032 | A | 24 March 2020 |
| | | | | CN | 110915032 | B | 21 June 2022 |
| | | | | EP | 3641028 | A1 | 22 April 2020 |
| | | | | EP | 3641028 | B1 | 15 December 2021 |
| | | | | EP | 3641028 | B8 | 19 January 2022 |
| | | | | JP | 2020-530192 | A | 15 October 2020 |
| | | | | JP | 7048853 | B2 | 06 April 2022 |
| | | | | KR | 10-2019-0043855 | A | 29 April 2019 |
| | | | | US | 11450846 | B2 | 20 September 2022 |
| | | | | US | 2020-0235381 | A1 | 23 July 2020 |
| | | | | WO | 2019-078503 | A1 | 25 April 2019 |

Form PCT/ISA/210 (patent family annex) (July 2022)